(19)

Europäisches
Patentamt

European
Patent Office

Office européen
des brevets

(11) **EP 2 824 140 A1**

(12) **EUROPEAN PATENT APPLICATION**
published in accordance with Art. 153(4) EPC

(43) Date of publication:
**14.01.2015 Bulletin 2015/03**

(21) Application number: **13757840.7**

(22) Date of filing: **07.03.2013**

(51) Int Cl.:
**C08L 9/02** *(2006.01)*          **C08K 3/34** *(2006.01)*
**C08L 27/06** *(2006.01)*

(86) International application number:
**PCT/JP2013/056244**

(87) International publication number:
**WO 2013/133358 (12.09.2013 Gazette 2013/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **08.03.2012 JP 2012052120**

(71) Applicant: **Zeon Corporation
Tokyo 100-8246 (JP)**

(72) Inventors:
• **TSUKADA, Akira
Tokyo 100-8246 (JP)**

• **SHIBUYA, Tomoyuki
Tokyo 100-8246 (JP)**
• **TAKEYAMA, Yoshihisa
Tokyo 100-8246 (JP)**
• **NAKAMURA,Tadashi
Tokyo 100-8246 (JP)**

(74) Representative: **Beckmann, Claus
Kraus & Weisert
Patentanwälte PartGmbB
Thomas-Wimmer-Ring 15
80539 München (DE)**

(54) **METHOD FOR PRODUCING NITRILE COPOLYMER RUBBER COMPOSITION**

(57)    A method of production of a nitrile copolymer rubber composition which contains a nitrile copolymer rubber, layered inorganic filler, vinyl chloride resin, and plasticizer comprising the steps of adding, to an aqueous dispersion of a vinyl chloride resin, 10 to 100 wt% of the total amount of plasticizer which is used and 0 to 100 wt% of the total amount of layered inorganic filler which is used to prepare an aqueous dispersion of a vinyl chloride resin which contains a plasticizer (A) and mixing an aqueous dispersion of a nitrile copolymer rubber (B) which may contain a plasticizer and/or layered inorganic filler and the aqueous dispersion of a vinyl chloride resin (A), then causing them to coagulate to form crumbs and filtering and drying the same is provided.

EP 2 824 140 A1

**Description**

TECHNICAL FIELD

The present invention relates to a method of production of a nitrile copolymer rubber composition which can form uniform coagulated crumbs and which gives cross-linked rubber which is excellent in ozone resistance after immersion in fuel oil.

BACKGROUD ART

Conventionally, rubber which contains $\alpha,\beta$-ethylenically unsaturated nitrile monomer units and conjugated diene monomer units (nitrile rubber) is known as rubber which is excellent in oil resistance and is mainly being used as a material for fuel hoses, fuel gaskets, fuel packings, oil seals, inlet hoses, and other industrial parts or other rubber products around oils in automobiles etc.

For such applications, excellent oil resistance is also an important requirement, but recently, due to the rising global activities to protect the environment, progress is being made in efforts to reduce evaporation of gasoline and other fuel into the atmosphere. For example, in Japan and Europe, $NO_X$ emissions are being restricted. Along with this, reduction of the amount of evaporation of fuel is being sought. For this reason, in applications of fuel hoses, seals, packings, etc., a much better gasoline permeation resistance is being sought.

Under this situation, Patent Document 1 discloses a nitrile copolymer rubber composition which is obtained by mixing, into a latex of a nitrile copolymer rubber, a latex of a vinyl chloride resin, a water-based emulsion of a plasticizer, and an aqueous dispersion of an inorganic filler and by coagulating and drying the obtained mixed aqueous dispersion. Patent Document 1 describes, by cross-linking this nitrile copolymer rubber composition, it is able to obtain a cross-linked rubber which is excellent in gasoline permeation resistance.

However, in the method of production which is disclosed in this

Patent Document 1, there were the problems that it was difficult to obtain uniform coagulated crumbs at the time of coagulation (meaning phenomenon where part of the vinyl chloride resin is not taken into the coagulated crumbs and masses mainly comprised of vinyl chloride resin end up being formed) and while the obtained cross-linked rubber was excellent in gasoline permeation resistance, the ozone resistance after immersion in fuel oil was not sufficient.

PRIOR ART DOCUMENTS

PATENT DOCUMENTS

Patent Document 1: Japanese Patent Publication No. 2009-235304A

SUMMARY OF THE INVENTION

PROBLEM TO BE SOLVED BY THE INVENTION

The present invention has as its object the provision of a method of production of a nitrile copolymer rubber composition which can form uniform coagulated crumbs and which can give cross-linked rubber which is excellent in ozone resistance after immersion in fuel oil.

MEANS FOR SOLVING THE PROBLEMS

The present inventors engaged in intensive research for achieving this object and as a result discovered that by adding a specific amount of a plasticizer to an aqueous dispersion of a vinyl chloride resin in advance to impregnate the vinyl chloride resin with a plasticizer, then mixing this with an aqueous dispersion of a nitrile copolymer rubber, it is possible to obtain uniform coagulated crumbs and that the obtained nitrile copolymer rubber composition can provide cross-linked rubber which is excellent in ozone resistance after immersion in fuel oil and thereby completed the present invention.

That is, according to the present invention, there is provided a method of production of a nitrile copolymer rubber composition which contains a nitrile copolymer rubber, layered inorganic filler, vinyl chloride resin, and plasticizer comprising the steps of adding, to an aqueous dispersion of a vinyl chloride resin, 10 to 100 wt% of the total amount of plasticizer which is used and 0 to 100 wt% of the total amount of layered inorganic filler which is used to prepare an aqueous dispersion of a vinyl chloride resin (A) which contains a plasticizer and mixing an aqueous dispersion of a nitrile copolymer rubber (B) which may contain a plasticizer and/or layered inorganic filler and the aqueous dispersion of a vinyl chloride resin (A), then causing them to coagulate to form crumbs and filtering and drying the same.

Further, in the method of production of a nitrile copolymer rubber composition of the present invention, preferably the aqueous dispersion of a vinyl chloride resin (A) is obtained by adding, to an aqueous dispersion of a vinyl chloride resin, 30 to 100 wt% of the total amount of plasticizer which is used and 80 to 100 wt% of the total amount of layered inorganic filler which is used.

Further, preferably the nitrile copolymer rubber contains $\alpha,\beta$-ethylenically unsaturated nitrile monomer units 20 to 80 wt%, conjugated diene monomer units which may be at least partially hydrogenated 20 to 80 wt%, and cationic monomer units 0 to 30 wt%, particularly preferably a monomer which forms the cationic monomer units is a vinyl group-containing cyclic tertiary amine monomer. Note that, preferably the layered inorganic filler has an aspect ratio of 30 to 2,000, particularly preferably the layered inorganic filler is montmorillonite.

Further, according to the present invention, there are provided a cross-linkable nitrile rubber composition which contains a nitrile copolymer rubber composition which is obtained by the method of production which is described above and a cross-linking agent and cross-linked rubber obtained by cross-linking the above cross-linkable nitrile rubber composition.

EFFECTS OF THE INVENTION

According to the method of production of the present invention, it is possible to provide a nitrile copolymer rubber composition which can form uniform coagulated crumbs and which can give cross-linked rubber which is excellent in ozone resistance after immersion in fuel oil.

DESCRIPTION OF EMBODIMENTS

The method of production of the present invention comprises the steps of

adding, to an aqueous dispersion of a vinyl chloride resin, 10 to 100 wt% of the total amount of plasticizer which is used and 0 to 100 wt% of the total amount of layered inorganic filler which is used to prepare an aqueous dispersion of a vinyl chloride resin (A) which contains a plasticizer and

mixing an aqueous dispersion of a nitrile copolymer rubber (B) which may contain a plasticizer and/or layered inorganic filler and the aqueous dispersion of a vinyl chloride resin (A), then causing them to coagulate to form crumbs and filtering and drying the same to produce a nitrile copolymer rubber composition which contains a nitrile copolymer rubber, layered inorganic filler, vinyl chloride resin, and plasticizer.

Nitrile Copolymer Rubber

The nitrile copolymer rubber used in the present invention is a nitrile rubber which contains $\alpha,\beta$-ethylenically unsaturated nitrile monomer units 20 to 80 wt%, conjugated diene monomer units which may be at least partially hydrogenated 20 to 80 wt%, and cationic monomer units 0 to 30 wt%.

The $\alpha,\beta$-ethylenically unsaturated nitrile monomer which forms the $\alpha,\beta$-ethylenically unsaturated nitrile monomer units is not particularly limited so long as an $\alpha,\beta$-ethylenically unsaturated compound which has nitrile groups, but, for example, acrylonitrile; $\alpha$-chloroacrylonitrile, $\alpha$-bromoacrylonitrile, or other $\alpha$-halogenoacrylonitrile; methacrylonitrile or other $\alpha$-alkylacrylonitrile; etc. may be mentioned. Among these as well, acrylonitrile and methacrylonitrile are preferable, while acrylonitrile is particularly preferable. These may be used as single types alone or as a plurality of types combined.

The ratio of content of the $\alpha,\beta$-ethylenically unsaturated nitrile monomer units in the nitrile copolymer rubber is 20 to 80 wt% with respect to the total monomer units, preferably 30 to 70 wt%, more preferably 40 to 65 wt%. If the ratio of content of the $\alpha,\beta$-ethylenically unsaturated nitrile monomer units is too low, the obtained cross-linked rubber deteriorates in oil resistance and deteriorates in gasoline permeation resistance. On the other hand, if the ratio of content of the $\alpha,\beta$-ethylenically unsaturated nitrile monomer units is too high, the obtained cross-linked rubber becomes higher in embrittlement temperature and becomes inferior in cold resistance.

The nitrile copolymer rubber used in the present invention contains conjugated diene monomer units so that the obtained cross-linked rubber has rubbery elasticity. Note that, the conjugated diene monomer units may be at least partially hydrogenated.

As the conjugated diene monomer which forms the conjugated diene monomer units, a conjugated diene monomer with 4 to 6 carbon atoms is preferable, for example, 1,3-butadiene, isoprene, 2,3-dimethyl-1,3-butadiene, 1,3-pentadiene, etc. may be mentioned. Among these as well, 1,3-butadiene is preferable. These may be used as single types alone or as a plurality of types combined.

The ratio of content of the conjugated diene monomer units in the nitrile copolymer rubber is 20 to 80 wt% with respect to the total monomer units, preferably 29.9 to 69.9 wt%, more preferably 34.7 to 59.7 wt%.

If the ratio of content of the conjugated diene monomer units is too low, the obtained cross-linked rubber is liable to fall in rubbery elasticity. On the other hand, if the ratio of content of the conjugated diene monomer units is too large, the obtained cross-linked rubber may deteriorate in gasoline permeation resistance.

Further, the nitrile copolymer rubber used in the present invention preferably contains cationic monomer units. "Cationic monomer units" means at least one monomer unit which is selected from cation-containing monomer units and monomer units able to form cations.

The cation-containing monomer which forms cationic monomer units is not particularly limited so long as a monomer which forms monomer units which are charged plus when the obtained polymer contacts water or an acid aqueous solution. As such a cation-containing monomer, for example, a monomer which contains a quaternary ammonium salt group may be mentioned. Further, as the monomer which forms monomer units able to form cations, monomers which have precursor parts (substituents) such as tertiary amino groups which form cations such as ammonium salts (for example, amine hydrochlorates and amine sulfates) when contacting acid aqueous solutions of hydrochloric acid and sulfuric acid etc. may be mentioned.

As specific examples of cation-containing monomers, (meth)acryloyloxytrimethyl ammonium chloride, (meth)acryloyloxyhydroxypropyltrimethyl ammonium chloride, (meth)acryloyloxytriethyl ammonium chloride, (meth)acryloyloxydimethylbenzyl ammonium chloride, (meth)acryloyloxytrimethyl ammonium methyl sulfate, and other (meth)acrylic acid ester monomers which contain groups having quaternary ammonium salts; (meth)acrylamidepropyltrimethyl ammonium chloride, (meth)acrylamidepropyldimethylbenzyl ammonium chloride, and other (meth)acrylamide monomers which contain groups having quaternary ammonium salts; etc. may be mentioned.

As specific examples of the monomer which forms monomer units able to form cations, 2-vinylpyridine, 4-vinylpyridine, and other vinyl group-containing cyclic tertiary amine monomers; dimethylaminoethyl (meth)acrylate, and other tertiary amino-group containing (meth)acrylic acid ester monomers; (meth)acrylamide-dimethylaminoethyl, N,N-dimethylaminopropylacrylamide, and other tertiary amino-group containing (meth)acrylamide monomers; N-(4-anilinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned. These may be used as single types alone or as a plurality of types combined.

Among these monomers, since the effects of the present invention become much more remarkable, a vinyl group-containing cyclic tertiary amine monomer, tertiary amino-group containing (meth)acrylic acid ester monomer, and tertiary amino-group containing (meth)acrylamide monomer are preferable, a vinyl group-containing cyclic tertiary amine monomer and tertiary amino-group containing acrylamide monomer are more preferable, and a vinyl group-containing cyclic tertiary amine monomer is furthermore preferable. Among these as well, vinyl group-containing pyridines are particularly preferable, while 2-vinylpyridine is most preferable.

The ratio of content of the cationic monomer units is 0 to 30 wt% with respect to the total monomer units, preferably 0.1 to 20 wt%, more preferably 0.3 to 10 wt%. By including cationic monomer units, the obtained cross-linked rubber becomes more superior in gasoline permeation resistance.

Further, the nitrile copolymer rubber used in the present invention may also contain, in addition to above-mentioned $\alpha,\beta$-ethylenically unsaturated nitrile monomer units, conjugated diene monomer units, and cationic monomer units, units of other monomers which can copolymerize with the monomers which form these monomer units. The ratio of content of such other monomer units is preferably 30 wt% or less with respect to the total monomer units, more preferably 20 wt% or less, furthermore preferably 10 wt% or less.

As such other monomers which can copolymerize, for example, fluoroethylvinyl ether, fluoropropylvinyl ether, o-(trifluoro) methylstyrene, vinyl pentafluorobenzoate, difluoroethylene, tetrafluoroethylene, and other fluorine-containing vinyl compounds; 1,4-pentadiene, 1,4-hexadiene, vinyl norbornene, dicyclopentadiene, and other unconjugated diene compounds; ethylene; propylene, 1-butene, 4-methyl-1-pentene, 1-hexene, 1-octene, and other $\alpha$-olefin compounds; acrylic acid, methacrylic acid and other $\alpha,\beta$-ethylenically unsaturated monovalent carboxylic acids; maleic acid, maleic anhydride, itaconic acid, itaconic anhydride, fumaric acid, fumaric anhydride, and other $\alpha,\beta$-ethylenically unsaturated polyvalent carboxylic acids and their anhydrides; methyl (meth)acrylate, ethyl (meth)acrylate, butyl (meth)acrylate, 2-ethylhexyl (meth)acrylate, and other $\alpha,\beta$-ethylenically unsaturated carboxylic acid alkyl esters; monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, dibutyl itaconate, and other monoesters and diesters of $\alpha,\beta$-ethylenically unsaturated polyvalent carboxylic acids; methoxyethyl (meth)acrylate, methoxypropyl (meth)acrylate, butoxyethyl (meth)acrylate, and other alkoxyalkyl esters of $\alpha,\beta$-ethylenically unsaturated carboxylic acids; 2-hydroxyethyl (meth)acrylate, 3-hydroxypropyl (meth)acrylate, and other hydroxyalkyl esters of $\alpha,\beta$-ethylenically unsaturated carboxylic acids; divinyl benzene, and other divinyl compounds; ethylene di(meth)acrylate, diethyleneglycol di(meth)acrylate, ethyleneglycol di(meth)acrylate, and other di(meth)acrylic acid esters; trimethylolpropane tri(meth)acrylate, and other trimethacrylic acid esters; and other multifunctional ethylenically unsaturated monomers, and also N-methylol(meth)acrylamide, N,N'- dimethylol(meth) acrylamide, and other self-cross-linkable compounds; etc. may be mentioned.

The nitrile copolymer rubber has a Mooney viscosity (below, sometimes called "polymer Mooney viscosity")

(ML$_{1+4}$, 100°C) of preferably 3 to 250, more preferably 15 to 180, furthermore preferably 20 to 160. If the nitrile copolymer rubber is too low in polymer Mooney viscosity, the obtained cross-linked rubber is liable to fall in strength characteristics. On the other hand, if too high, the workability may deteriorate.

The nitrile copolymer rubber used in the present invention can be produced by copolymerizing the above-mentioned monomers which form the nitrile copolymer rubber. The method of copolymerizing the monomers is not particularly limited, but, for example, the emulsion polymerization method using sodium dodecylbenzene sulfonate or other emulsifying agent to obtain a latex of a copolymer which has an approximately 50 to 1000 nm average particle size, the suspension polymerization method which using a polyvinyl alcohol or other dispersant to obtain an aqueous dispersion of a copolymer which has an approximately 0.2 to 200 μm average particle size (including also microsuspension polymerization method) etc. may be suitably used. Among these as well, since control of the polymerization reaction is easy, the emulsion polymerization method is more preferable.

The emulsion polymerization method is preferably performed by the following procedure.

Note that, below, suitably, an α,β-ethylenically unsaturated nitrile monomer will be referred to as the "monomer (m1)", a conjugated diene monomer will be referred to as the "monomer (m2)", and a monomer which forms cationic monomer units will be referred to as a "monomer (m3)".

That is, the method of emulsion polymerizing a monomer mixture which is comprised of the monomer (m1) 20 to 85 wt%, preferably 30 to 75 wt%, more preferably 40 to 70 wt%, the monomer (m2) 15 to 80 wt%, preferably 24.9 to 69.9 wt%, more preferably 29.7 to 59.7 wt%, and the monomer (m3) 0 to 30 wt%, preferably 0.1 to 20 wt%, particularly preferably 0.3 to 10 wt% (however, the total of the monomer (m1), monomer (m2), and monomer (m3) being 100 wt%), stopping the polymerization reaction at the point of time when the polymer conversion rate is preferably 50 to 95 wt%, then removing the unreacted monomers as desired is preferable.

If the amount of use of the monomer (m1) used for the emulsion polymerization method is too small, the obtained cross-linked rubber deteriorates in oil resistance and therefore deteriorates in gasoline permeation resistance. On the other hand, if the amount of use of the monomer (m1) is too large, it tends to deteriorate in cold resistance. If the amount of use of the monomer (m2) is too small, the obtained cross-linked rubber deteriorates in cold resistance, while if the amount of use of the monomer (m2) is too large, the obtained cross-linked rubber tends to deteriorate in gasoline permeation resistance. Further, by using the monomer (m3) in the above-mentioned range, the obtained cross-linked rubber can be further improved in gasoline permeation resistance.

Note that, if the polymer conversion rate for stopping the polymerization reaction is too low, recovery of the unreacted monomers becomes extremely difficult. On the other hand, if too high, the obtained cross-linked rubber deteriorates in normal physical properties.

When performing emulsion polymerization, an emulsifying agent, polymerization initiator, secondary polymerization materials, etc. which are conventionally known in the field of emulsion polymerization may be suitably used. The polymerization temperature and the polymerization time may also be suitably adjusted.

Further, it is also possible to use the entire amounts of the monomers (m1) to (m3) which are used for the emulsion polymerization to start the polymerization reaction, but from the viewpoint of controlling the distribution of composition of the monomer units of the copolymer which is formed and obtain cross-linked rubber richer in rubber elasticity, it is preferable to use parts of the entire amounts of the monomers (m1) to (m3) which are used for the emulsion polymerization to start the polymerization reaction and, after that, add the remains of the monomers (m1) to (m3) which are used for the emulsion polymerization at a stage in the middle of the reaction to continue the polymerization reaction. This is because if ending up causing the entire amounts of the monomers (m1) to (m3) which are used for the emulsion polymerization to react from the time of start of the polymerization reaction, the distribution of composition of the copolymer will end up becoming broader.

In this case, it is preferable to charge into the reactor a monomer mixture which is comprised of preferably 10 to 100 wt% of the monomer (m1) which is used for the polymerization, more preferably 20 to 100 wt%, particularly preferably 30 to 100 wt%, preferably 5 to 90 wt% of the monomer (m2) which is used for the polymerization, more preferably 10 to 80 wt%, particularly preferably 15 to 70 wt%, and preferably 0 to 100 wt% of the monomer (m3) which is used for the polymerization, more preferably 30 to 100 wt%, particularly preferably 70 to 100 wt% to start the polymerization reaction, then add the remains of the monomers when the polymer conversion rate with respect to the monomer mixture which is charged into the reactor is preferably 5 to 80 wt% in range so as to continue the polymerization reaction. Note that, even if not using the monomer (m3), among the monomer (m1) and the monomer (m2) which are used for the polymerization, it is preferable to use the above-mentioned amounts to start the polymerization reaction and then add the remains of the monomer (m1) and monomer (m2) to the reactor for the polymerization.

The method of adding the remaining monomers is not particularly limited. They may be added all together, may be added in batches, or may be added continuously. In the present invention, from the viewpoint of enabling easily control of the distribution of composition of the obtained copolymer, it is preferable to add the remains of the monomers in batches and is particularly preferable to add it divided into one to six batches. If adding the remains of the monomers in batches, the amounts of monomers added in batches and the timings of addition of the batches may be adjusted in accordance with the progress in the polymerization reaction so as to obtain the desired nitrile copolymer rubber.

After the end of the polymerization reaction, if desired, heat distillation, vacuum distillation, steam distillation, or other known method may be used to remove the unreacted monomers and thereby obtain an aqueous dispersion of a nitrile copolymer rubber (x). The aqueous dispersion of a nitrile copolymer rubber (x) has a solid content concentration of preferably 5 to 70 wt%, more preferably 10 to 60 wt%, particularly preferably 15 to 50 wt%.

Further, the nitrile copolymer rubber used in the present invention may also be a hydrogenated nitrile rubber obtained by hydrogenating (hydrogen addition reaction) at least part of the conjugated diene monomer units of the copolymer which is obtained by copolymerization in the above manner. Note that, in the present invention, the conjugated diene monomer units are considered to include units having structures in which conjugated diene monomer units are hydrogenated (saturated conjugated diene monomer units).

The method of hydrogenation is not particularly limited, but a known method may be employed. When making the nitrile copolymer rubber a hydrogenated nitrile rubber, its iodine value is preferably 0 to 70 in range, more preferably 4 to 60 in range. By hydrogenating the nitrile copolymer rubber to obtain hydrogenated nitrile rubber, it is possible to improve the heat resistance, weather resistance, ozone resistance, etc.

Layered Inorganic Filler

The layered inorganic filler used in the present invention is a flat-shaped inorganic compound. By using a layered inorganic filler, the obtained cross-linked rubber becomes excellent in gasoline permeation resistance.

The layered inorganic filler has an aspect ratio of preferably 30 to 2000, more preferably 40 to 1,000, particularly preferably 50 to 500. If the layered inorganic filler is too small in aspect ratio, the obtained cross-linked rubber ends up deteriorating in gasoline permeation resistance. On the other hand, if too large in aspect ratio, dispersion into the nitrile copolymer rubber composition becomes difficult and the obtained cross-linked rubber ends up falling in mechanical strength.

The aspect ratio of the layered inorganic filler can be calculated by finding the ratio of the planar average size and average thickness of the primary particles of the layered inorganic filler. Here, the planar average size and average thickness are values of number averages which are obtained by measuring the sizes in the planar direction and thicknesses of 100 particles of the layered inorganic filler which have been randomly selected by an interatomic microscope and calculating the arithmetic averages.

The volume average particle size of the layered inorganic filler as measured by a laser diffraction scattering particle size measuring device is preferably 0.1 to 80 $\mu$m, more preferably 0.1 to 60 $\mu$m, furthermore preferably 0.1 to 40 $\mu$m.

The total amount of use of the layered inorganic filler is preferably 1 to 100 parts by weight with respect to 100 parts by weight of the total amount of use of the nitrile copolymer rubber, more preferably 3 to 70 parts by weight, particularly preferably 5 to 40 parts by weight. If the amount of use of the layered inorganic filler is too small, the obtained cross-linked rubber deteriorates in gasoline permeation resistance or normal physical properties. On the other hand, if the amount of use of the layered inorganic filler is too large, the obtained cross-linked rubber tends to fall in elongation.

The layered inorganic filler used in the present invention is not particularly limited. It may be a naturally derived one, may be a natural one which is refined and otherwise treated, and may be a synthetic one. As specific examples, kaorinite and halloysite and other kaorinites; montmorillonite, beidellite, nontronite, saponite, hectorite, stevensite, mica, and other smectites; vermiculites; chlorites; talc; E glass or C glass and other amorphous plate-shaped particles comprised of glass flakes, etc. may be mentioned. Among these, smectites are preferable, and montmorillonite, mica, and saponite are particularly preferable. These may be used as single types alone or as a plurality of types combined. Note that, montmorillonite, mica, and saponite are multilayer structures which have exchangeable positive ions between layers, so if the above-mentioned nitrile copolymer rubber has cationic monomer units, it has excellent dispersability in the nitrile copolymer rubber.

Here, among these, montmorillonite is contained as a main ingredient in bentonite. For this reason, as the montmorillonite, it is possible to use one which is obtained by refining bentonite etc.

Vinyl Chloride Resin

The vinyl chloride resin used in the present invention is one in which the main constituent monomer forming the resin is vinyl chloride, and the content of the monomer units is preferably 50 to 100 wt%, more preferably 60 to 100 wt%, particularly preferably 70 to 100 wt%.

Further, the vinyl chloride resin preferably has a Tg (glass transition temperature measured by a differential scan calorimeter (DSC)) of 50 to 180°C, particularly preferably 60 to 150°C.

The vinyl chloride resin is not particularly limited in polymerization degree, but the average polymerization degree which is measured by the solution viscosity method which is prescribed in JIS K6721 is preferably 400 to 3,000, more preferably 600 to 2,000. If the polymerization degree is too small, the obtained cross-linked rubber is liable to deteriorate in ozone resistance, while conversely if too large, the nitrile copolymer rubber composition sometimes is inferior in shapeability.

The total amount of use of the vinyl chloride resin is preferably 1 to 150 parts by weight with respect to 100 parts by weight of the total amount of use of the nitrile copolymer rubber, more preferably 10 to 120 parts by weight, particularly preferably 20 to 100 parts by weight. If the amount of use of the vinyl chloride resin is too small, the effect of addition becomes hard to obtain. On the other hand, if too large, the cold resistance is liable to deteriorate.

The vinyl chloride resin is preferably particle shaped. The volume average particle size is preferably 0.01 $\mu$m to 1 mm, more preferably 0.05 to 500 $\mu$m, furthermore preferably 0.1 to 200 $\mu$m, particularly preferably 0.5 to 150 $\mu$m. The volume average particle size is measured by a laser diffraction scattering particle size measurement apparatus. If the vinyl chloride resin is too small in volume average particle size, the obtained cross-linked rubber is liable to fall in ozone resistance, while if too large, there is a possibility of poor dispersion occurring at the time of kneading the nitrile copolymer rubber composition.

Plasticizer

The plasticizer used in the present invention is not particularly limited, but since the obtained cross-linked rubber becomes excellent in gasoline permeation resistance and cold resistance and falls in embrittlement temperature (is improved in cold resistance), a plasticizer with an SP value (solubility parameter) by the HOY method of 8.0 to 10.2 $(cal/cm^3)^{1/2}$ is preferable.

As specific examples of such a plasticizer (units of SP value are "$(cal/cm^3)^{1/2}$"), for example, dibutoxyethyl adipate (SP value: 8.8), di(butoxyethoxyethyl)adipate (SP value: 9.2), di(methoxytetraethyleneglycol)adipate, di(methoxypentaethyleneglycol) adipate, (methoxytetraethyleneglycol)(methoxypentaethyleneglycol) adipate, di(methoxytriethoxyethyl)adipate, (methoxytriethoxyethyl) (methoxytetraethoxyethyl)adipate, di(methoxytetraethoxyethyl)adipate, (butoxytriethoxyethyl)(pentoxytetraethoxyethyl)adipate, (pentoxytriethoxyethyl) (pentoxytetraethoxyethyl)adipate, and other ester compounds of adipic acid and ether bond-containing alcohols; dibutoxyethyl azelate, di(butoxyethoxyethyl)azelate, and other ester compounds of azelaic acid and ether bond-containing alcohols; dibutoxyethyl sebacate, di(butoxyethoxyethyl)sebacate, and other ester compounds of sebacic acid and ether bond-containing alcohols; dibutoxyethyl phthalate, di(butoxyethoxyethyl)phthalate, and other ester compounds of phthalic acid and ether bond-containing alcohols; dibutoxyethyl isophthalate, di(butoxyethoxyethyl)isophthalate, and other ester compounds of isophthalic acid and ether bond-containing alcohols; di-(2-ethylhexyl)adipate (SP value: 8.5), diisodecyl adipate (SP value: 8.3), diisononyl adipate, dibutyl adipate (SP value: 8.9), and other adipic acid dialkyl esters; di-(2-ethylhexyl)azelate (SP value: 8.5), diisooctyl azelate, di-n-hexyl azelate, and other azelaic acid dialkyl esters; di-n-butyl sebacate (SP value: 8.7), di-(2-ethylhexyl)sebacate (SP value: 8.4), and other sebacic acid dialkyl esters; dibutyl phthalate (SP value: 9.4), di-(2-ethylhexyl) phthalate (SP value: 9.0), di-n-octyl phthalate, diisobutyl phthalate, diheptyl phthalate (SP value: 9.0), diisodecyl phthalate (SP value: 8.5), diundecyl phthalate (SP value: 8.5), diisononyl phthalate (SP value: 8.9), and other phthalic acid dialkyl esters; dicyclohexyl phthalate and other phthalic acid dicycloalkyl esters; diphenyl phthalate, butylbenzyl phthalate (SP value: 10.2), and other phthalic acid arylesters; di-(2-ethylhexyl) isophthalate, diisooctyl isophthalate, and other isophthalic acid dialkyl esters; di-(2-ethylhexyl) tetrahydrophthalate, di-n-octyl tetrahydrophthalate, diisodecyl tetrahydrophthalate, and other tetrahydrophthalic acid dialkyl esters; tri-(2-ethylhexyl) trimellitate (SP value: 8.9), tri-n-octyl trimellitate (SP value: 8.9), triisodecyl trimellitate (SP value: 8.4), triisooctyl trimellitate, tri-n-hexyl trimellitate, triisononyl trimellitate (SP value: 8.8), triisodecyl trimellitate (SP value: 8.8), and other trimellitic acid derivatives; epoxylated soybean oil (SP value: 9.0), epoxylated linseed (SP value: 9.3), and other epoxy-based plasticizers; tricresyl phosphate (SP value: 9.7), and other phosphoric acid ester-based plasticizers; etc. may be mentioned. These may be used as single types alone or as a plurality of types combined.

Among these as well, the obtained cross-linked rubber can be made much better in gasoline permeation resistance and cold resistance, so ester compounds of adipic acid, azelaic acid, sebacic acid, phthalic acid, and other dibasic acids and ether bond-containing alcohols are preferable, ester compounds of adipic acid and ether bond-containing alcohols are more preferable, and di(butoxyethoxyethyl)adipate is particularly preferable.

The total amount of use of the plasticizer is preferably 0.1 to 200 parts by weight with respect to 100 parts by weight of the total amount of use of the nitrile copolymer rubber, more preferably 5 to 150 parts by weight, particularly preferably 10 to 70 parts by weight. If the amount of use of the plasticizer is in this range, bleeding can be prevented and the effects of the present invention can be made much more remarkable.

Method of Production of Nitrile Copolymer Rubber Composition

The method of production of the nitrile copolymer rubber composition of the present invention comprises the steps of

adding, to an aqueous dispersion of a vinyl chloride resin, 10 to 100 wt% of the total amount of plasticizer which is used and 0 to 100 wt% of the total amount of layered inorganic filler which is used to prepare an aqueous dispersion of a vinyl chloride resin (A) which contains a plasticizer and

mixing an aqueous dispersion of a nitrile copolymer rubber (B) which may contain a plasticizer and/or layered inorganic filler and the aqueous dispersion of a vinyl chloride resin (A), then causing them to coagulate to form crumbs and filtering and drying the same to produce a nitrile copolymer rubber composition which contains a nitrile copolymer rubber, layered inorganic filler, vinyl chloride resin, and plasticizer.

Aqueous Dispersion of Vinyl Chloride Resin (A)

The aqueous dispersion of a vinyl chloride resin (A) is an aqueous dispersion of a vinyl chloride resin containing a plasticizer and a layered inorganic filler in accordance with need, which is obtained by adding 10 to 100 wt% of the total amount of plasticizer which is used and 0 to 100 wt% of the total amount of layered inorganic filler which is used to an aqueous dispersion of a vinyl chloride resin in the state where these are not added (before adding these).

By adding a specific amount of plasticizer to the aqueous dispersion of a vinyl chloride resin in advance to impregnate the vinyl chloride resin with a plasticizer, then mixing this with the aqueous dispersion of a nitrile copolymer rubber (B), it is possible to obtain uniform coagulated crumbs (meaning not occurring phenomenon that part of the vinyl chloride resin is not taken into the coagulated crumbs and masses mainly comprised of vinyl chloride resin is formed) and the obtained cross-linked rubber becomes excellent in ozone resistance after immersion in fuel oil.

Note that, in the present invention, "the total amount of plasticizer which is used" means the entire amount of plasticizer which is included in the nitrile copolymer rubber composition which is obtained by the method of production of the present invention, similarly "the amount of layered inorganic filler which is used" means the entire amount of layered inorganic filler which is included in the nitrile copolymer rubber composition which is obtained by the method of production of the present invention.

The amount of addition of the plasticizer is 10 to 100 wt% of the total amount of plasticizer which is used, preferably 20 to 100 wt%, more preferably 30 to 100 wt%, particularly preferably 100 wt%. That is, in the present invention, when preparing the aqueous dispersion of a vinyl chloride resin (A), it is particularly preferable to use the total plasticizer which is used and add the total plasticizer which is used to an aqueous dispersion of a vinyl chloride resin in a state where the plasticizer and layered inorganic filler have not been added.

When the amount of addition of plasticizer is in this range, the effects of the present invention become much more remarkable.

Further, the amount of addition of the layered inorganic filler is 0 to 100 wt% of the total amount of layered inorganic filler which is used, preferably 50 to 100 wt%, more preferably 80 to 100 wt%, particularly preferably 100 wt%. That is, in the present invention, when preparing the aqueous dispersion of a vinyl chloride resin (A), it is particularly preferable to use the total layered inorganic filler which is used and add the total layered inorganic filler which is used to an aqueous dispersion of a vinyl chloride resin in a state where the plasticizer and layered inorganic filler have not been added.

When the amount of addition of the layered inorganic filler is in this range, the effects of the present invention become much more remarkable.

The method of production of an aqueous dispersion of a vinyl chloride resin in the state where the plasticizer and layered inorganic filler have not been added is not particularly limited, but it is possible to use as is an aqueous dispersion of a vinyl chloride resin which is obtained by the conventionally known emulsion polymerization or suspension polymerization or further to prepare it by strongly stirring ion exchanged water or other aqueous medium while adding a commercially available vinyl chloride resin. When using a commercially available vinyl chloride resin, it is sufficient to use an aqueous medium which contains a 0.1 to 80 wt% amount, preferably 1 to 40 wt% amount, with respect to the vinyl chloride resin, of sodium polyacrylate, sodium tripolyphosphate, sodium hexametaphosphate, sodium pyrophosphate, sodium polymaleate, an Na salt of β-naphthalenesulfonic acid-formalin condensate or other dispersant or surfactant etc. These dispersants or surfactants may be used as single types alone or as a plurality of types combined.

Note that, the aqueous dispersion of a vinyl chloride resin has a solid content concentration of preferably 1 to 60 wt%, more preferably 5 to 50 wt%.

The aqueous dispersion of a vinyl chloride resin (A) can be obtained by adding to and stirring with the aqueous dispersion of a vinyl chloride resin in a state where the plasticizer and layered inorganic filler are not added, obtained in the above way, 10 to 100 wt% of the total amount of plasticizer which is used and 0 to 100 wt% of the total amount of layered inorganic filler.

In this case, the plasticizer or layered inorganic filler may be directly added or the plasticizer or layered inorganic filler may be added dispersed in a small amount of water.

Further, the aqueous dispersion of a vinyl chloride resin (A) can be obtained by mixing the vinyl chloride resin and the plasticizer in advance by a Henschel mixer etc. to impregnate the vinyl chloride resin with a plasticizer and add this to ion exchanged water or other aqueous medium which contains the above-mentioned dispersant or surfactant etc. according to need and stir the mixture.

Note that, at the time of stirring, the temperature is preferably 20 to 90°C, particularly preferably 40 to 90°C, while the stirring time is preferably 1 minute to 5 hours, particularly preferably 10 minutes to 2 hours.

The aqueous dispersion of a vinyl chloride resin (A) has a solid content concentration of preferably 3 to 70 wt%, more preferably 5 to 60 wt%, particularly preferably 7 to 50 wt%.

Aqueous Dispersion of Nitrile Copolymer Rubber (B)

The aqueous dispersion of a nitrile copolymer rubber (B) is not particularly limited, but can be obtained by adding, to the aqueous dispersion of a nitrile copolymer rubber (x) which was obtained by the above-mentioned emulsion polymerization, 0 to 90 wt% of the total amount of plasticizer which is used and 0 to 100 wt% of the total amount of layered inorganic filler which is used while stirring.

Note that, when adding a plasticizer or layered inorganic filler, the plasticizer or layered inorganic filler may be directly added or the plasticizer or layered inorganic filler may be added after being dispersed in a small amount of water.

Further, the temperature at the time of stirring is preferably 10 to 90°C, particularly preferably 15 to 60°C, while the stirring time is preferably 1 minute to 5 hours, particularly preferably 10 minutes to 2 hours.

Further, the aqueous dispersion of a nitrile copolymer rubber (B) has a solid content concentration of preferably 5 to 70 wt%, more preferably 10 to 60 wt%, particularly preferably 15 to 50 wt%.

Mixing, Coagulation, and Drying

In the method of production of a nitrile copolymer rubber composition of the present invention, by mixing the aqueous dispersion of a vinyl chloride resin (A) and the aqueous dispersion of a nitrile copolymer rubber (B), then coagulating the mixture to form crumbs and then filtering and dring these, it is possible to obtain a nitrile copolymer rubber composition which contains a nitrile copolymer rubber, layered inorganic filler, vinyl chloride resin, and plasticizer.

The method of mixing the aqueous dispersion of a vinyl chloride resin (A) and the aqueous dispersion of a nitrile copolymer rubber (B) is not particularly limited, but the method of stirring the aqueous dispersion of a nitrile copolymer rubber (B) while adding an aqueous dispersion of a vinyl chloride resin (A) to obtain a mixed aqueous dispersion (y) which contains a nitrile copolymer rubber, layered inorganic filler, vinyl chloride resin, and plasticizer is preferable. At the time of mixing, the temperature is preferably 10 to 90°C, particularly preferably 15 to 60°C, while the stirring time is preferably 1 minute to 5 hours, particularly preferably 10 minutes to 2 hours.

In this case, the mixed aqueous dispersion (y) preferably contains the layered inorganic filler in 1 to 100 parts by weight with respect to 100 parts by weight of the nitrile copolymer rubber, more preferably contains it in 3 to 70 parts by weight, furthermore preferably contains it in 5 to 40 parts by weight, particularly preferably contains it in 10 to 30 parts by weight.

Also, the mixed aqueous dispersion (y) preferably contains the vinyl chloride resin in 1 to 150 parts by weight with respect to 100 parts by weight of the nitrile copolymer rubber, more preferably contains it in 10 to 120 parts by weight, furthermore preferably contains it in 20 to 100 parts by weight, and particularly preferably contains it in 40 to 80 parts by weight.

Further, the mixed aqueous dispersion (y) preferably contains the plasticizer in 0.1 to 200 parts by weight with respect to 100 parts by weight of the nitrile copolymer rubber, more preferably contains it in 5 to 150 parts by weight, furthermore preferably contains it in 10 to 70 parts by weight, and particularly preferably contains it in 20 to 60 parts by weight.

Further, the mixed aqueous dispersion (y) has a solid content concentration of preferably 5 to 70 wt%, more preferably 10 to 60 wt%, particularly preferably 15 to 50 wt%.

Next, the mixed aqueous dispersion (y) and the coagulating solution which contains a coagulant are brought into contact to form crumbs. These are filtered, rinsed, then dried to obtain a nitrile copolymer rubber composition which contains a nitrile copolymer rubber, layered inorganic filler, vinyl chloride resin, and plasticizer.

The method of coagulating the mixed aqueous dispersion (y) is not particularly limited. Salting out coagulation or other known methods are applied. Among these, it is preferable to add the mixed aqueous dispersion (y) to an aqueous solution which contains a coagulant and salt it out. As the coagulating agent, calcium chloride, sodium chloride, calcium hydroxide, aluminum sulfate, and aluminum hydroxide, etc. may be mentioned. The amount of use of the coagulant is preferably 0.5 to 150 parts by weight with respect to 100 parts by weight of the nitrile copolymer rubber, particularly preferably 0.5 to 20 parts by weight.

Here, when the nitrile copolymer rubber contains cationic monomer units, when salting out the mixed aqueous dispersion (y), it is preferable to add a dilute sulfuric acid aqueous solution etc. to control the pH of the coagulant aqueous solution to the isoelectric point of the mixed aqueous dispersion (y) or less. By controlling the pH of the coagulant aqueous solution, zeta potential of the functional groups of the cationic monomer units which are contained in the nitrile copolymer rubber in the mixed aqueous dispersion (y) rises. Due to this, the layered inorganic filler is improved in dispersability and the crumbs which are obtained by coagulation can be made larger in particle size.

The particle size of the crumbs has a great effect on the dehydration degree at the vibrating screen and squeezer after the coagulation and washing processes, the crumb recovery rate, and the dryness in the drying process, so the crumbs have an average particle size of preferably 0.5 to 40 mm. The methods of washing, dehydrating, and drying the crumbs are similar to the washing and dehydrating methods and drying method in the production of general rubber. As the washing and dehydrating methods, a mesh type filter, centrifugal separator, etc. may be used to separate the crumbs obtained by coagulation and water, then the crumbs may be washed and dehydrated by a squeezer etc. Next, a band dryer, air circulation vertical dryer, single-screw extruder, twin-screw extruder, etc. which are generally used for production of rubber may be used to dry the crumbs to a desired water content and thereby obtain the nitrile copolymer rubber composition of the present invention. Further, in the twin-screw extruder, coagulation and drying may be simultaneously performed.

Note that, as the method of production of a nitrile copolymer rubber composition of the present invention, in addition to the above-mentioned method, for example, it is also possible to introduce parts of the layered inorganic filler, plasticizer, and/or vinyl chloride resin into the mixed aqueous dispersion (y), coagulate and dry it, then add the remains of the above ingredients and knead them by rolls or a Bambury mixer or other kneader.

In this case, the remains of the layered inorganic filler are preferably 50 wt% or less of the total amount of layered inorganic filler which is used. Further, the remains of the plasticizer are preferably 50 wt% or less of the total amount of plasticizer which is used. Further, the remains of the vinyl chloride resin are preferably 50 wt% or less of the total amount of the vinyl chloride resin which is used.

Cross-Linkable Nitrile Rubber Composition

The cross-linkable nitrile rubber composition of the present invention contains the nitrile copolymer rubber composition which is obtained by the method of production of the present invention and a cross-linking agent.

As the cross-linking agent, a sulfur-based cross-linking agent, organic peroxide cross-linking agent, etc. may be mentioned. Use of a sulfur-based cross-linking agent is preferable.

As the sulfur-based cross-linking agent, powdered sulfur, flowers of sulfur, precipitated sulfur, colloidal sulfur, surface-treated sulfur, insoluble sulfur, and other sulfur; sulfur chloride, sulfur dichloride, morpholin disulfide, alkylphenol disulfide, dibenzothiazyl disulfide, N,N'-dithio-bis(hexahydro-2H-azenopin-2), phosphorus-containing polysulfide, high molecular weight polysulfide, and other sulfur-containing compounds; tetramethylthiuram disulfide, selenium dimethyldithiocarbamate, 2-(4'-morpholinodithio)benzothiazole, and other sulfur-donor compounds; etc. may be mentioned. These may be used as single types alone or as two types or more combined.

As the organic peroxide cross-linking agent, dicumyl peroxide, cumen hydroperoxide, t-butylcumyl peroxide, p-menthane hydroperoxide, di-t-butylperoxide, 1,3-bis(t-butylperoxyisopropyl)benzene, 1,4-bis(t-butylperoxyisopropyl)benzene, 1,1-di-t-butylperoxy-3,3-trimethylcyclohexane, 4,4-bis-(t-butyl-peroxy)-n-butyl valerate, 2,5-dimethyl-2,5-di-t-butylperoxyhexane, 2,5-dimethyl-2,5-di-t-butylperoxyhexine-3, 1,1-di-t-butylperoxy-3,5,5-trimethylcyclohexane, p-chlorobenzoyl peroxide, t-butylperoxyisopropyl carbonate, t-butylperoxy benzoate, etc. may be mentioned. These may be used as single types alone or as two types or more combined.

The content of the cross-linking agent in the cross-linkable nitrile rubber composition of the present invention is not particularly limited, but is preferably 0.1 to 10 parts by weight with respect to 100 parts by weight of the nitrile copolymer rubber, more preferably 0.2 to 8 parts by weight.

When using the sulfur-based cross-linking agent, Zinc White, stearic acid, and other cross-linking aid; guanidine-based, aldehyde-amine-based, aldehyde-ammonia-based, thiazole-based, sulfenamide-based, thiourea-based, and other cross-linking accelerators; may be jointly used. The amounts of use of these cross-linking aids and cross-linking accelerators are not particularly limited, but are preferably 0.1 to 10 parts by weight in range with respect to 100 parts by weight of the nitrile copolymer rubber.

When using an organic peroxide cross-linking agent, as the cross-linking aid, trimethylolpropane trimethacrylate, divinylbenzene, ethylene dimethacrylate, triallyl isocyanulate, and other polyfunctional monomers etc. may be jointly used. The amount of use of these cross-linking aids is not particularly limited, but is preferably 0.5 to 20 parts by weight in range with respect to 100 parts by weight of the nitrile copolymer rubber.

Further, the cross-linkable nitrile rubber composition of the present invention may also have blended into it, in accordance with need, a compounding agent which is used for general rubber, for example, a cross-linking retardant, reinforcing agent, a filler other than the layered inorganic filler, anti-aging agent, stabilizer, slip agent, tackifier, lubricant, processing aid, flame retardant, antifungal agent, anti-static agent, coloring agent, coupling agent, and other additives.

The method of preparation of the cross-linkable nitrile rubber composition of the present invention is not particularly limited, but it is sufficient to add the cross-linking agent, cross-linking aid, and the other compounding agents to the nitrile copolymer rubber composition which is obtained by the above-mentioned method and knead it by a roll or Bambury mixer or other kneader.

Note that, in this case, the order of blending is not particularly limited, but it is sufficient to fully mix in the ingredients which are resistant to reaction and decomposition under heat, then mix in the ingredients which easy decompose under heat (cross-linking agent, cross-linking accelerator, etc.) at a temperature at which decomposition does not occur and in a short time.

The cross-linkable nitrile rubber composition of the present invention has a Mooney viscosity (below, sometimes referred to as "compound Mooney viscosity") ($ML_{1+4}$, 100°C) of preferably 5 to 300, more preferably 10 to 250.

Note that, the cross-linkable nitrile rubber composition of the present invention may contain a rubber other than the nitrile copolymer rubber in a range not detracting from the effects of the present invention. The rubber other than the nitrile copolymer rubber is not particularly limited, but an acrylic rubber, ethylene-acrylate copolymer rubber, fluororubber, styrene-butadiene copolymer rubber, ethylene-propylene copolymer rubber, ethylene-propylene-diene ternary copolymer rubber, epichlorohydrin rubber, urethane rubber, chloroprene rubber, ethylene-vinyl acetate copolymer, chlorosulfonated polyethylene, natural rubber, polyisoprene rubber, etc. may be mentioned. Note that, the amount in the case of blending in a rubber other than a nitrile copolymer rubber is, so as not to detract from the excellent oil resistance and normal physical properties of the nitrile copolymer rubber, preferably 50 parts by weight or less with respect to 100 parts by weight of nitrile copolymer rubber, more preferably 30 parts by weight or less, furthermore preferably 10 parts by weight or less, particularly preferably 3 parts by weight or less.

Cross-Linked Rubber

The cross-linked rubber of the present invention is obtained by cross-linking the above-mentioned cross-linkable nitrile rubber composition.

When cross-linking the cross-linkable nitrile rubber composition, a shaping machine corresponding to the shape of the shaped article (cross-linked rubber) being produced, for example, an extruder, injection molding machine, compressor, rolls, etc. is used to shape the composition, then a cross-linking reaction is caused to fix the shape of the cross-linked product. When performing the cross-linking, it is possible to cross-link the composition after the preliminary shaping or cross-link it simultaneously with the shaping. The shaping temperature is usually 10 to 200°C, preferably 25 to 120°C. The cross-linking temperature is usually 100 to 200°C, preferably 130 to 190°C, while the cross-linking time is usually 1 minute to 24 hours, preferably 2 minutes to 1 hour.

Depending on the shape, size, etc., cross-linked rubber sometimes is not sufficiently cross-linked to the inside part even if the surface is cross-linked, so it may be further heated for secondary cross-linking.

The thus obtained cross-linked rubber of the present invention is a cross-linked rubber which is excellent in oil resistance and gasoline permeation resistance and is excellent in ozone resistance after immersion in fuel oil.

For this reason, the cross-linked rubber of the present invention is one which is suitable for use in numerous fields such as fuel hoses, fuel seals, etc. Further, the effect is exhibited that it is possible to reduce the amount of dispersion of gasoline or other fuel into the atmosphere and thereby reduce the load on the environment.

The cross-linked rubber of the present invention is suitably used as a fuel hose etc. by making a hose which is comprised of one or more layers of which at least one layer is comprised of the cross-linked rubber of the present invention. In the case of a two or more layer laminate, the layer which is comprised of the cross-linked rubber of the present invention may be used for either the inside layer, intermediate layer, and outside layer. As the other layers of the laminate, nitrile rubber with a content of $\alpha,\beta$-ethylenically unsaturated nitrile monomer units of preferably 5 to 35 wt%, more preferably 18 to 30 wt% and also rubber which contains that nitrile rubber and a vinyl chloride resin or acrylic resin or a fluororubber, chloroprene rubber, hydrin rubber, chlorosulfonated polyethylene rubber, acrylic rubber, ethylene-acrylic acid copolymer, ethylene-propylene copolymer, ethylene-propylene-diene ternary copolymer, butyl rubber, isoprene rubber, natural rubber, styrene-butadiene copolymer, fluororesin, polyamide resin, polyvinyl alcohol, ethylene-vinyl acetate copolymer resin, ethylene-vinyl alcohol copolymer resin, polybutylene naphthalate, polyphenylene sulfide, polyolefin resin, polyester resin, etc. may be mentioned. These may be used as single types alone or as a plurality of types combined.

Further, in accordance with need, to bond a layer which is comprised of the cross-linked rubber of the present invention and another layer, it is possible to include tetrabutylphosphonium benzotriazolate, tetraoctylphosphonium benzotriazolate, methyltrioctylphosphonium benzotriazolate, tetrabutylphosphonium tolyltriazolate, tetraoctylphosphonium tolyltriazolate, and other phosphonium salts, 1,8-diazabicyclo(5.4.0)undecene-7 salt (DBU salt), 1,5-diazabicyclo(4.3.0)-nonene-5 salt (DBN salt), etc. in one or both of the layer which is comprised of the cross-linked rubber of the present invention and another layer.

The method of producing a hose which includes the cross-linked rubber of the present invention having the above configuration is not particularly limited, but an extruder etc. can be used to shape the rubber into a tube and cross-link it to produce a hose.

The cross-linked rubber of the present invention is suitable for packings, gaskets, O-rings, oil seals, and other seal members; oil hoses, fuel hoses, inlet hoses, gas hoses, brake hoses, refrigerant hoses, and other hoses; diaphragms; accumulator bladders; boots; etc. and is particularly suitably used for hoses. As the gas which is transported by the above-mentioned gas hoses, air, nitrogen, oxygen, hydrogen, carbon dioxide, carbon monoxide, methane, ethane, propane, dimethylether, LPG, steam, etc. may be mentioned.

EXAMPLES

Below, examples and comparative examples will be given to more specifically explain the present invention, but the present invention is not limited to these examples. Below, unless otherwise indicated, "parts" are based on weight. The test or evaluation methods of the physical properties and characteristics are as follows.

Mooney Viscosity

The Mooney viscosity (polymer Mooney viscosity) ($ML_{1+4}$, 100°C) of the nitrile copolymer rubber was measured in accordance with JIS K 6300.

Normal Physical Properties (Tensile Strength, Elongation, 100% Tensile Stress, Hardness)

The cross-linkable nitrile rubber composition was placed in a mold of a vertical 15 cm, horizontal 15 cm, and depth 0.2 cm and press-formed at 160°C for 20 minutes while applying 10 MPa pressure to obtain sheet-shaped cross-linked rubber. The obtained sheet-shaped cross-linked rubber was punched by a JIS No. 3 type dumbbell die to prepare test pieces, then these were used to measure the cross-linked rubber for tensile strength, elongation, and 100% tensile stress in accordance with JIS K6251. Further, in accordance with JIS K6253, a Durometer Hardness Tester Type A was used to measure the hardness of the cross-linked rubber.

Ozone Resistance

Sheet-shaped cross-linked rubber similar to the one which was used for measurement of the normal physical properties was prepared and punched in accordance with JIS K6251 by a JIS No. 1 shape dumbbell die to obtain a test piece. This test piece was used in accordance with JIS K6259 to conduct an ozone resistance test under conditions of a temperature of 40°C, an ozone concentration of 50 pphm, and 50% elongation. The surface conditions of the sample were examined and the time until cracks formed was measured. The longer the time until cracks formed, the better the ozone resistance.

Note that, in Table 1, "336<" indicates no cracks occurred in the test piece even after the elapse of 336 hours.

Ozone Resistance After Immersion in Fuel Oil

Sheet-shaped cross-linked rubber similar to the one which was used for measurement of the normal physical properties was prepared and punched in accordance with JIS K6251 by a JIS No. 1 shape dumbbell die to obtain a test piece. The obtained test piece was immersed in 40°C fuel oil (isooctane, toluene, and ethanol mixed in weight ratio 2:2:1) for 48 hours, then the test piece was taken out and dried at 23°C for 24 hours, then was allowed to stand in a 100°C gear oven for 72 hours. This test piece was used in accordance with JIS K6259 to conduct an ozone resistance test under conditions of a temperature of 40°C, an ozone concentration of 50 pphm, and 50% elongation. The surface conditions of the sample were examined and the time until cracks formed was measured. The longer the time until cracks formed, the better the ozone resistance after immersion in fuel oil.

Note that, in Table 1, "336<" indicates no cracks occurred in the test piece even after the elapse of 336 hours.

Measurement of Content of Vinyl Chloride Resin

The content of the vinyl chloride resin in the nitrile copolymer rubber composition was found in accordance with JIS K7229 by quantifying the chlorine content of the nitrile copolymer rubber composition and using the following formula.

$$[\text{Vinyl chloride resin content (\%)}]=[\text{Chlorine content (\%)}]\times 62.5$$

The larger this value, the more sufficiently the vinyl chloride resin is taken into the coagulated crumbs and the more uniform the coagulated crumbs which are obtained.

Production Example 1 (Production of Aqueous Dispersion of Nitrile Copolymer Rubber (b1))

A reaction vessel was charged with water 240 parts, acrylonitrile 75.7 parts, 2-vinylpyridine 2.2 parts, and sodium dodecylbenzenesulfonate (emulsifying agent) 2.5 parts and was adjusted in temperature to 5°C. Next, the vapor phase was reduced in pressure to sufficiently degas the vessel, then 1,3-butadiene 22 parts, a polymerization initiator constituted by p-menthane hydroperoxide 0.06 part, sodium ethylenediamine tetraacetate 0.02 part, ferrous sulfate (7-hydrate) 0.006 part, sodium formaldehyde sulfoxylate 0.06 part, and the chain transfer agent of t-dodecyl mercaptan 1 part were added to start the first stage of the reaction of the emulsion polymerization. After the start of reaction, at the points of time when the polymerization conversion rates with respect to the charged monomers reached 42 wt% and 60 wt%, the reaction vessel was additionally charged with 1,3-butadiene 12 parts and 12 parts respectively to perform the second and third stages of the polymerization reaction. After this, at the point of time when the polymerization conversion rate with respect to the total monomers charged reached 75 wt%, hydroxylamine sulfate 0.3 part and potassium hydroxide 0.2 part were added to make the polymerization reaction stop. After stopping the reaction, the content of the reaction vessel was warmed to 70°C and steam distillation was used under reduced pressure to recover the unreacted monomers to obtain an aqueous dispersion of the nitrile copolymer rubber (b1) (solid content 24 wt%).

Part of the latex was sampled, a large amount of methanol was used to coagulate it, then the result was filtered and dried to obtain nitrile copolymer rubber (b1). The ratios of content of the monomer units which form the obtained nitrile copolymer rubber (b1) were measured by $^1$H-NMR using an FT-NMR apparatus (product name "AVANCE III500", made by Bruker BioSpin), whereby the ratios were acrylonitrile units 50 wt%, 1,3-butadiene units 48 wt%, and 2-vinylpyridine units 2 wt%. Further, the nitrile copolymer rubber (b1) had a Mooney viscosity (polymer Mooney viscosity) of 73.

Production Example 2 (Production of Aqueous Dispersion of Vinyl Chloride Resin (a1))

A vinyl chloride resin (product name "Kanevinyl S1007", made by Kaneka, polymerization degree: 720) 100 parts was added to distilled water 450 parts containing sodium polyacrylate 20 parts and strongly stirred to obtain an aqueous dispersion of a vinyl chloride resin. To the obtained aqueous dispersion of a vinyl chloride resin, a plasticizer constituted by di(butoxyethoxyethyl)adipate 12 parts and potassium rosinate 1 part were added with respect to 100 parts of vinyl chloride resin, then the mixture was heated to 80°C and stirred for 1 hour. Next, with stirring, a layered inorganic filler constituted by refined bentonite (product name "Bengel HV", made by Hojun, aspect ratio: 295) was added in 33.3 parts with respect to 100 parts of vinyl chloride resin to obtain an aqueous dispersion of a vinyl chloride resin (a1) which contains a plasticizer and layered inorganic filler.

Production Example 3 (Production of Aqueous Dispersion of Vinyl Chloride Resin (a2))

Except for changing the amount of addition of the plasticizer constituted by di(butoxyethoxyethyl)adipate in Production Example 2 from 12 parts to 40 parts, the same procedure was followed as in Production Example 2 to obtain an aqueous dispersion of a vinyl chloride resin (a2) which contains a plasticizer and layered inorganic filler.

Production Example 4 (Production of Aqueous Dispersion of Vinyl Chloride Resin (a3))

Except for changing the amount of addition of the plasticizer constituted by di(butoxyethoxyethyl)adipate in Production Example 2 from 12 parts to 100 parts, the same procedure was followed as in Production Example 2 to obtain an aqueous dispersion of a vinyl chloride resin (a3) which contains a plasticizer and layered inorganic filler.

Production Example 5 (Production of Aqueous Dispersion of Vinyl Chloride Resin (a4))

Except for not using the plasticizer constituted by di(butoxyethoxyethyl)adipate in Production Example 2, the same procedure was followed as in Production Example 2 to obtain an aqueous dispersion of a vinyl chloride resin (a4) which contains a layered inorganic filler.

Production Example 6 (Production of Aqueous Dispersion of Vinyl Chloride Resin (a5))

Except for changing the amount of addition of the plasticizer constituted by di(butoxyethoxyethyl)adipate in Production Example 2 from 12 parts to 5 parts, the same procedure was followed as in Production Example 2 to obtain an aqueous dispersion of a vinyl chloride resin (a5) which contains a plasticizer and layered inorganic filler.

Example 1

While stirring an aqueous dispersion of the nitrile copolymer rubber (b1) which was obtained at Production Example 1 in a vessel, an aqueous dispersion of the vinyl chloride resin (a1) which was obtained in Production Example 2 was added to give vinyl chloride resin 60 parts (plasticizer 7.2 parts, layered inorganic filler 20 parts) with respect to 100 parts of the nitrile copolymer rubber (b1) in the aqueous dispersion and the result kneaded to obtain a mixed aqueous dispersion. Further, to an aqueous solution which contains calcium chloride (coagulant) in an amount of 4 parts with respect to 100 parts of the nitrile copolymer rubber (b1) in the obtained mixed aqueous dispersion, 10% dilute sulfuric acid was suitably added to adjust the pH of the aqueous solution during coagulation to a pH 2 while pouring the mixed aqueous dispersion while stirring to cause coagulation and form crumbs of a nitrile copolymer rubber composition which contains a nitrile copolymer rubber, layered inorganic filler, vinyl chloride resin, and plasticizer.

Further, the obtained crumbs were filtered and rinsed, then were dried in vacuo at 60°C to obtain a dried crumb-state nitrile copolymer rubber composition.

The content of the vinyl chloride resin in the obtained nitrile copolymer rubber composition was measured by the above method, whereupon 99 wt% of the total amount of the vinyl chloride resin which was used was taken into the crumbs and uniform coagulated crumbs were obtained.

Next, a Bambury mixer was used to mix the nitrile copolymer rubber composition and a stabilizer (product name "Alcamizer 1", made by Kyowa Chemical Industry) 2 parts with respect to 100 parts of the nitrile copolymer rubber (b1) in the nitrile copolymer rubber composition until the temperature became 160°C. Further, this mixture was transferred to rolls and cooled, then a Bambury mixer was again used to add a plasticizer constituted by di(butoxyethoxyethyl)adipate 52.8 parts with respect to 100 parts of the nitrile copolymer rubber (b1), FEF carbon black (Seast SO, made by Tokai Carbon) 15 parts, an antiaging agent constituted by 2,2,4-trimethyl-1,2-dehydroquinoline polymer (product name "Nocrac 224", made by Ouchi Shinko Chemical Industrial) 3 parts, N-phenyl-N'-isopropyl-p-phenylenediamine (product name "Nocrac 810-NA", made by Ouchi Shinko Chemical Industrial) 3 parts, wax (product name "Sunnoc", made by Ouchi Shinko Chemical Industrial) 1.5 parts, a cross-linking aid constituted by zinc white 7 parts, and stearic acid 1.5 parts and knead them at 50°C. Further, this kneaded product was transferred to rolls, then a cross-linking agent of 325 mesh sulfur 0.8 part, tetramethylthiuram disulfide (product name "Noccelar TT", made by Ouchi Shinko Chemical Industrial) 2.5 parts, and N-cyclohexyl-2-benzothiazolylsulfenamide (product name "Noccelar CZ", made by Ouchi Shinko Chemical Industrial, cross-linking accelerator) 2.5 parts were added and kneaded at 50°C to prepare a cross-linkable nitrile rubber composition.

The obtained cross-linkable nitrile rubber composition was cross-linked to obtain cross-linked rubber, then this was evaluated for normal physical properties (tensile strength, elongation, 100% tensile stress, hardness), ozone resistance, and ozone resistance after immersion in fuel oil. The results are shown in Table 1.

Example 2

Except for using, instead of the aqueous dispersion of a vinyl chloride resin (a1) which was obtained in Production Example 2, the aqueous dispersion of a vinyl chloride resin (a2) which was obtained in Production Example 3 and adding and mixing an aqueous dispersion of a vinyl chloride resin (a2) so that the amount of the vinyl chloride resin becomes 60 parts (plasticizer 24 parts and layered inorganic filler 20 parts) with respect to 100 parts of the nitrile copolymer rubber (b1) in the aqueous dispersion, the same procedure was followed as in Example 1 to form crumbs of a nitrile copolymer rubber composition which contains a nitrile copolymer rubber, layered inorganic filler, vinyl chloride resin, and plasticizer and dry them to obtain dried crumb-state nitrile copolymer rubber composition.

The content of the vinyl chloride resin in the obtained nitrile copolymer rubber composition was measured by the above method, whereupon 100 wt% of the total amount of the vinyl chloride resin which was used was taken into the crumbs and uniform coagulated crumbs were obtained.

Next, except for changing the plasticizer constituted by di(butoxyethoxyethyl)adipate 52.8 parts to a plasticizer constituted by di(butoxyethoxyethyl)adipate 36 parts, the same procedure was followed as in Example 1 to prepare a cross-linkable nitrile rubber composition.

The obtained cross-linkable nitrile rubber composition was cross-linked to obtain cross-linked rubber, then this was evaluated in the same way as Example 1. The results are shown in Table 1.

Example 3

Except for using, instead of the aqueous dispersion of a vinyl chloride resin (a1) which was obtained in Production Example 2, the aqueous dispersion of a vinyl chloride resin (a3) which was obtained in Production Example 4 and adding and mixing an aqueous dispersion of a vinyl chloride resin (a3) so that the amount of the vinyl chloride resin becomes 60 parts (plasticizer 60 part and layered inorganic filler 20 parts) with respect to 100 parts of the nitrile copolymer rubber (b1) in the aqueous dispersion, the same procedure was followed as in Example 1 to form crumbs of a nitrile copolymer rubber composition which contains a nitrile copolymer rubber, layered inorganic filler, vinyl chloride resin, and plasticizer and dry them to obtain dried crumb-state nitrile copolymer rubber composition.

The content of the vinyl chloride resin in the obtained nitrile copolymer rubber composition was measured by the above method, whereupon 100 wt% of the total amount of the vinyl chloride resin which was used was taken into the crumbs and uniform coagulated crumbs were obtained.

Next, except for not adding the plasticizer constituted by di(butoxyethoxyethyl)adipate 52.8 parts, the same procedure was followed as in Example 1 to prepare a cross-linkable nitrile rubber composition.

The obtained cross-linkable nitrile rubber composition was cross-linked to obtain cross-linked rubber, then this was evaluated in the same way as Example 1. The results are shown in Table 1.

Comparative Example 1

Except for using, instead of the aqueous dispersion of a vinyl chloride resin (a1) which was obtained in Production Example 2, the aqueous dispersion of a vinyl chloride resin (a4) which was obtained in Production Example 5 and adding and mixing an aqueous dispersion of a vinyl chloride resin (a4) so that the amount of the vinyl chloride resin becomes 60 parts (plasticizer 0 part and layered inorganic filler 20 parts) with respect to 100 parts of the nitrile copolymer rubber (b1) in the aqueous dispersion, the same procedure was followed as in Example 1 to form crumbs of a nitrile copolymer rubber composition which contains a nitrile copolymer rubber, layered inorganic filler, vinyl chloride resin, and plasticizer and dry them to obtain dried crumb-state nitrile copolymer rubber composition.

The content of the vinyl chloride resin in the obtained nitrile copolymer rubber composition was measured by the above method, whereupon only 68 wt% of the total amount of the vinyl chloride resin which was used was taken into the crumbs (that is, uniform coagulated crumbs could not be obtained).

Next, except for changing the plasticizer constituted by di(butoxyethoxyethyl)adipate 52.8 parts to a plasticizer constituted by di(butoxyethoxyethyl)adipate 60 parts, the same procedure was followed as in Example 1 to prepare a cross-linkable nitrile rubber composition.

The obtained cross-linkable nitrile rubber composition was cross-linked to obtain cross-linked rubber, then this was evaluated in the same way as Example 1. The results are shown in Table 1.

Comparative Example 2

Except for using, instead of the aqueous dispersion of a vinyl chloride resin (a1) which was obtained in Production Example 2, the aqueous dispersion of a vinyl chloride resin (a5) which was obtained in Production Example 6 and adding and mixing an aqueous dispersion of a vinyl chloride resin (a5) so that the amount of the vinyl chloride resin becomes 60 parts (plasticizer 3 parts and layered inorganic filler 20 parts) with respect to 100 parts of the nitrile copolymer rubber (b1) in the aqueous dispersion, the same procedure was followed as in Example 1 to form crumbs of a nitrile copolymer rubber composition which contains a nitrile copolymer rubber, layered inorganic filler, vinyl chloride resin, and plasticizer and dry them to obtain dried crumb-state nitrile copolymer rubber composition.

The content of the vinyl chloride resin in the obtained nitrile copolymer rubber composition was measured by the above method, whereupon only 77 wt% of the total amount of the vinyl chloride resin which was used was taken into the crumbs (that is, uniform coagulated crumbs could not be obtained).

Next, except for changing the plasticizer constituted by di(butoxyethoxyethyl)adipate 52.8 parts to a plasticizer constituted by di(butoxyethoxyethyl)adipate 57 parts, the same procedure was followed as in Example 1 to prepare a cross-linkable nitrile rubber composition.

The obtained cross-linkable nitrile rubber composition was cross-linked to obtain cross-linked rubber, then this was evaluated in the same way as Example 1. The results are shown in Table 1.

Comparative Example 3

A layered inorganic filler constituted by refined bentonite (product name "Bengel HV", made by Hojun, aspect ratio: 295) 100 parts was added to distilled water 1995 parts containing sodium polyacrylate 5 parts and strongly stirred to obtain an aqueous dispersion of a layered inorganic filler with a solid content concentration of 5 wt%.

Further, an aqueous dispersion of the nitrile copolymer rubber (b1) which was obtained in Production Example 1 was stirred in a vessel while adding and mixing an aqueous dispersion of the layered inorganic filler so that the amount of the layered inorganic filler became 20 parts (not including plasticizer and vinyl chloride resin) with respect to 100 parts of the nitrile copolymer rubber (b1) in the aqueous dispersion so as to obtain a mixed aqueous dispersion.

Further, in an aqueous solution which contains calcium chloride (coagulant) in an amount of 4 parts with respect to 100 parts of the nitrile copolymer rubber (b1) in the obtained mixed aqueous dispersion, 10% dilute sulfuric acid was suitably added to adjust the pH to give a pH 2 of the aqueous solution during coagulation while pouring the mixed aqueous dispersion while stirring to cause coagulation and form crumbs of nitrile copolymer rubber composition which contains a nitrile copolymer rubber and layered inorganic filler.

Further, the obtained crumbs were filtered and rinsed, then dried at 60°C under reduced pressure to obtain a dried crumb-state nitrile copolymer rubber composition.

Next, except for using, instead of the stabilizer (product name "Alcamizer 1", made by Kyowa Chemical Industry) 2 parts, a vinyl chloride resin (product name "Kanevinyl S1007", made by Kaneka, polymerization degree: 720) 60 parts, a plasticizer constituted by di(butoxyethoxyethyl)adipate 60 parts, and a stabilizer (product name "Alcamizer 1", made by Kyowa Chemical Industry) 2 parts, the same procedure was followed as in Example 1 to prepare a cross-linkable nitrile rubber composition. The obtained cross-linkable nitrile rubber composition was cross-linked to obtain cross-linked rubber, then this was evaluated in the same way as Example 1. The results are shown in Table 1. [Table 1]

Table 1

| | | | | Example | | | Comparative Example | | |
|---|---|---|---|---|---|---|---|---|---|
| | | | | 1 | 2 | 3 | 1 | 2 | 3 |
| Nitrile copolymer rubber | | | | b1 | b1 | b1 | b1 | b1 | b1 |
| | Composition | Acrylonitrile units | (wt%) | 50 | 50 | 50 | 50 | 50 | 50 |
| | | 1,3-butadiene units | (wt%) | 48 | 48 | 48 | 48 | 48 | 48 |
| | | 2-vinylpyridine units | (wt%) | 2 | 2 | 2 | 2 | 2 | 2 |
| Nitrile copolymer rubber composition (total amounts of use of ingredients) | | | | | | | | | |
| | | Nitrile copolymer rubber | (parts) | 100 | 100 | 100 | 100 | 100 | 100 |
| | | Vinyl chloride resin | (parts) | 60 | 60 | 60 | 60 | 60 | 60 |
| | | Plasticizer | (parts) | 60 | 60 | 60 | 60 | 60 | 60 |
| | | Layered inorganic filler | (parts) | 20 | 20 | 20 | 20 | 20 | 20 |
| Method of mixing nitrile copolymer rubber and vinyl chloride resin | | | | Mixing in state of aqueous dispersion | Mixing in state of aqueous dispersion | Mixing in state of aqueous dispersion | Mixing in state of aqueous dispersion | Mixing in state of aqueous dispersion | Adding vinyl chloride resin as dry blend |
| Amount of plasticizer added to aqueous dispersion of vinyl chloride resin (ratio to total amount of plasticizer used) | | | (wt%) | 12 | 40 | 100 | 0 | 5 | 0 |
| Ratio of vinyl chloride resin, charged as aqueous dispersion, which was taken into coagulated crumbs | | | (wt%) | 99 | 100 | 100 | 68 | 77 | - |
| Cross-linked rubber | | | | | | | | | |
| | | Tensile strength | (MPa) | 16.5 | 16.4 | 16.3 | 15.3 | 15.7 | 16.2 |
| | | Elongation | (%) | 310 | 320 | 310 | 380 | 340 | 300 |
| | | 100% tensile stress | (MPa) | 4.4 | 4.3 | 4.3 | 3.2 | 3.8 | 4.4 |

(continued)

| | | | Example | | | Comparative Example | | |
|---|---|---|---|---|---|---|---|---|
| | | | 1 | 2 | 3 | 1 | 2 | 3 |
| | Hardness | (Duro-A) | 69 | 68 | 68 | 62 | 65 | 69 |
| Ozone resistance (crack forming time) | | (hr) | 336< | 336< | 336< | 336< | 336< | 336< |
| Ozone resistance after immersion in fuel (crack forming time) | | (hr) | 336< | 336< | 336< | 48 | 120 | 168 |

From Table 1, when using the method of production of the present invention, it was possible to obtain uniform coagulated crumbs which were high in content of vinyl chloride resin in the crumbs. Further, the cross-linked rubber which was obtained by the coagulated crumbs was excellent in ozone resistance after immersion in fuel oil (Examples 1 to 3).

On the other hand, when not adding a plasticizer to the aqueous dispersion of a vinyl chloride resin and therefore the requirements of the present invention were not satisfied (Comparative Example 1) or when adding plasticizer to the aqueous dispersion of a vinyl chloride resin, but the amount of addition was too small and therefore the requirements of the present invention were not satisfied (Comparative Example 2), the content of vinyl chloride resin in the crumbs was low and uniform coagulated crumbs could not be obtained (part of the vinyl chloride resin was not taken into the coagulated crumbs and separated). Further, the cross-linked rubber which was obtained from the coagulated crumbs was insufficient in ozone resistance after immersion in fuel oil as well.

Further, when an aqueous dispersion of a vinyl chloride resin was not used and therefore the requirements of the present invention were not satisfied, the obtained cross-linked rubber was insufficient in ozone resistance after immersion in fuel oil (Comparative Example 3).

**Claims**

1. A method of production of a nitrile copolymer rubber composition which contains a nitrile copolymer rubber, layered inorganic filler, vinyl chloride resin, and plasticizer comprising the steps of
   adding, to an aqueous dispersion of a vinyl chloride resin, 10 to 100 wt% of the total amount of plasticizer which is used and 0 to 100 wt% of the total amount of layered inorganic filler which is used to prepare an aqueous dispersion of a vinyl chloride resin (A) which contains a plasticizer and
   mixing an aqueous dispersion of a nitrile copolymer rubber (B) which may contain a plasticizer and/or layered inorganic filler and said aqueous dispersion of a vinyl chloride resin (A), then causing them to coagulate to form crumbs and filtering and drying the same.

2. The method of production of a nitrile copolymer rubber composition as set forth in claim 1, wherein said aqueous dispersion of a vinyl chloride resin (A) is obtained by adding, to an aqueous dispersion of a vinyl chloride resin, 30 to 100 wt% of the total amount of plasticizer which is used and 80 to 100 wt% of the total amount of layered inorganic filler which is used.

3. The method of production of a nitrile copolymer rubber composition as set forth in claim 1 or 2, wherein said nitrile copolymer rubber contains $\alpha,\beta$-ethylenically unsaturated nitrile monomer units 20 to 80 wt%, conjugated diene monomer units which may be at least partially hydrogenated 20 to 80 wt%, and cationic monomer units 0 to 30 wt%.

4. The method of production of a nitrile copolymer rubber composition as set forth in claim 3, wherein a monomer which forms said cationic monomer units is a vinyl group-containing cyclic tertiary amine monomer.

5. The method of production of a nitrile copolymer rubber composition as set forth in any one of claims 1 to 4, wherein said layered inorganic filler has an aspect ratio of 30 to 2,000.

6. The method of production of a nitrile copolymer rubber composition as set forth in any one of claims 1 to 5, wherein said layered inorganic filler is montmorillonite.

7. A cross-linkable nitrile rubber composition containing the nitrile copolymer rubber composition which is obtained by the method of production as set forth in any one of claims 1 to 6 and a cross-linking agent.

8. A cross-linked rubber obtained by cross-linking the cross-linkable nitrile rubber composition as set forth in claim 7.

## INTERNATIONAL SEARCH REPORT

| | International application No. |
|---|---|
| | PCT/JP2013/056244 |

A. CLASSIFICATION OF SUBJECT MATTER
*C08L9/02*(2006.01)i, *C08K3/34*(2006.01)i, *C08L27/06*(2006.01)i

According to International Patent Classification (IPC) or to both national classification and IPC

B. FIELDS SEARCHED

Minimum documentation searched (classification system followed by classification symbols)
C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 7-196849 A (The Goodyear Tire & Rubber Co.), 01 August 1995 (01.08.1995), claims; paragraphs [0033], [0034]; example 5 & US 5362787 A & EP 669370 A1 & AU 7882394 A & BR 9404432 A & CA 2118652 A | 1-8 |
| A | JP 10-287780 A (Katsura Roller Mfg. Co., Ltd.), 27 October 1998 (27.10.1998), claims; paragraphs [0009] to [0012], [0018]; examples (Family: none) | 1-8 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01 May, 2013 (01.05.13) | 14 May, 2013 (14.05.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/056244

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2012/002356 A1 (Nippon Zeon Co., Ltd.), 05 January 2012 (05.01.2012), claims; paragraphs [0046], [0051], [0055]; example 5 (Family: none) | 1-8 |
| A | WO 2011/115093 A1 (Nippon Zeon Co., Ltd.), 22 September 2011 (22.09.2011), claims; paragraph [0066]; example 9 (Family: none) | 1-8 |
| A | JP 2011-213844 A (Nippon Zeon Co., Ltd.), 27 October 2011 (27.10.2011), claims; examples (Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009235304 A